# EUROPÄISCHE PATENTSCHRIFT

(11) **EP 1 107 883 B1**
(45) Veröffentlichungstag und Bekanntmachung des Hinweises auf die Patenterteilung: **19.05.2004**
(21) Anmeldenummer: 99942799.0
(22) Anmeldetag: 26.07.1999
(51) Int. Cl.: B60R 16/02

(54) **HALTERUNGSELEMENT UND HALTERUNG FÜR STARRE LEITUNGEN IN EINEM FAHRZEUG**
RETAINING MEMBER AND RETAINING SYSTEM FOR RIGID DUCTS IN A VEHICLE
ELEMENT DE RETENUE ET SYSTEME DE RETENUE POUR CONDUITES RIGIDES DANS UN VEHICULE

(30) Priorität: 03.09.1998 DE 19840136
(43) Veröffentlichungstag der Anmeldung: 20.06.2001
(73) Patentinhaber: Volkswagen Aktiengesellschaft, 38436 Wolfsburg (DE)
(72) Erfinder: HAUER, Matthias, D-38543 Hillerse (DE)
(86) Internationale Anmeldenummer: PCT/EP1999/005319
(87) Internationale Veröffentlichungsnummer: WO 2000/013941

(56) Entgegenhaltungen:
- DE-A- 3 705 626
- DE-A- 19 546 086
- FR-A- 2 704 027
- US-A- 4 431 152
- US-A- 4 678 147

## Beschreibung

Die Erfindung betrifft ein Halterungselement und eine Halterung für starre Leitungen in einem Fahrzeug, insbesondere die Leitungen einer Klimaanlage.

Dokument FR-A-2 704 027 offenbart ein Halterungselement bzw. eine Halterung gemäß dem Oberbegriff des Anspruchs 1 bzw. 10.

Zur Festlegung starrer Leitungen an einem Fahrzeugaufbauteil oder einer Fahrzeugkomponente werden üblicherweise offene Kunststoffclips und Schellen verwendet. Die jeweilige Schelle kann mit einer Gummieinlage versehen sein, die eine ausgleichende Wirkung bezüglich einer Relativbewegung, beispielsweise zwischen der am Fahrzeugaufbauteil befestigten Schelle und der an einer Fahrzeugkomponente befestigten Leitung, hat und die somit eine durch den laufenden Motor gegebene dynamische Belastungen aufnimmt. Derartige Schellen werden auch zur Halterung der Kältemittelleitungen einer in einem Fahrzeug eingebauten Klimaanlage eingesetzt. Im Kältemittelkreislauf der Klimaanlage ist zwischen einem Kondensator und einem Expansionsventil eine Kältemittel-Druckleitung und zwischen dem Expansionsventil und einem dem Kondensator vorgeschalteten Kompressor eine Kältemittel-Saugleitung angeordnet, wobei der Kompressor mit dem Motor verbunden ist und somit Motorbewegungen über den Kompressor und die Saugleitung zu deren Halterung an einer durch die Motorbewegung nicht beeinträchtigten Fahrzeugkomponente weitergeleitet werden können. Die Halterungen haben neben der vorbeschriebenen bewegungsdämpfenden Funktion auch eine geräuschdämpfende Funktion, da der Kompressor und auch das in den Leitungen fließende Kältemittel störende Geräusche erzeugen, die über die jeweilige Leitung auf die Halterung und damit auf das Fahrzeug übertragen werden.

Es sind des weiteren Kunststoff-Doppelschellen bekannt, mit denen parallel angeordnete Leitungen festgelegt werden können. Bei diesen treten die gleichen beschriebenen Probleme auf.

Aus der DE 195 46 086 A1 ist eine Mehrfachschelle zum Verlegen von Leitungen mit einem Aufnahmeteil und Halterungen für die Leitungen bekannt, die ein Bügelteil zur zusätzlichen Anordnung von wenigstens einer Leitung in einer zweiten Anordnungsebene mit einer Halterungsvorrichtung für die Leitung aufweist. Die Halterungsvonichtung ist dabei aus einer am Bügelteil ausgebildeten wannenförmigen Anlagefläche für die Leitung und zwei am Bügelteil angeformten, radial auf die Leitung gerichteten Klemmschenkeln gebildet, die die Leitung an der Anlagefläche haltern. Da das Bügelteil im montierten Zustand fest mit dem Aufnahmeteil und dieses fest mit einer Fahrzeugkomponente verbunden ist, ist eine dynamische und akustische Entkopplung zwischen dieser und der Leitung nicht gegeben.

Es ist nun Aufgabe der Erfindung, ein Halterungselement für starre Leitungen in einem Fahrzeug nach dem Oberbegriff des Anspruchs 1 und eine Halterung nach dem Oberbegriff des Anspruchs 10 zu schaffen, die eine weitestgehende Entkopplung des Fahrzeugs von den dynamischen und akustischen Beaufschlagungen der zu haltemden Leitungen sicherstellen.

Diese Aufgabe wird bei einem Halterungselement nach dem Oberbegriff des Anspruchs 1 und einer Halterung nach dem Oberbegriff des Anspruchs 10 durch deren kennzeichnende Merkmale gelöst.

Das erfindungsgemäße Halterungselement ist aus einem Befestigungsteil zur Festlegung an einem Fahrzeugaufbauteil und einer Aufnahme zum Fixieren der Leitung gebildet, wobei in der Aufnahme radial nach innen gerichtete und im Abstand zueinander angeordnete Klemmvorsprünge zur druckelastischen Anlage an der Leitung ausgebildet sind. Diese auf die Klemmvorsprünge beschränkte elastische Anlage der Aufnahme an der Leitung, durch die diese in der Aufnahme festgelegt wird, ermöglicht eine weitestgehende Entkopplung der Halterungselemente von den dynamischen und akustischen Beaufschlagungen der zu halternden Leitung durch den Motor bzw. das fließende Kältemittel, so daß die Leitungsbewegungen und die Rauschgeräusche nicht auf das Fahrzeugaufbauteil übertragen werden.

Vorzugsweise ist das Halterungselement einstückig ausgebildet und besteht aus einem elastischen Werkstoff mit einem geringen Temperaturkoeffizienten. Damit ist die Halterung der Leitung auch unabhängig von Temperaturbelastungen und - schwankungen, die beim Betreiben der Klimaanlage durch das fließende Kältemittel und die durch dieses abgekühlte Leitung einerseits und die Motorwärme andererseits auftreten. Als Werkstoff eignet sich der elastische Konstruktionswerkstoff HYTREL, ein Polyester-Elastomer der Fa. Du Pont in hervorragender Weise.

Die Klemmvorsprünge können axial ausgerichtete Rippen sein, die durch ihre Beschaffenheit, also Länge, Dicke, Anzahl und Werkstoff, insbesondere jedoch durch ihre Anzahl, Einfluß auf den Entkopplunsgrad nehmen können. Es hat sich gezeigt, daß durch im Abstand von 45° im Innern der Aufnahme koaxial angeordnete Rippen eine ausreichende Entkopplung sichergestellt werden kann.

Die Aufnahme kann längs ihrer Achse zweigeteilt und die beiden Teile können durch ein parallel zur Achse angeordnetes Führungsschamier miteinander verbindbar ausgebildet sein, so daß die Leitung in das eine Teil eingebettet und durch das andere, quer zur Achse über die Leitung schwenkbare Teil elastisch gegen die Klemmvorsprünge gedrückt und damit in der Aufnahme elastisch festgeklemmt werden kann. Dazu können wiederum Rastelemente an beiden Teilen angebracht sein, die die Teile gegen den Klemmwiderstand aneinander fixieren.

Diese Ausführung stellt eine Schnellkupplung mit den aufgabengemäßen Dämpfungseigenschaften dar, durch die die Montagezeit verringert werden kann.

Die Aufnahme kann jedoch auch in der Form eines offenen Ringes ausgebildet sein, der zwei Schenkel bildet, zwischen denen leitungseinführseitig ein Spalt ausgebildet ist. Durch diesen Spalt kann die Leitung auf einfache Weise in die Aufnahme und gegen die Klemmvorsprünge gedrückt und in dieser druckelastisch fixiert werden. Auch diese Ausführung stellt eine Schnellkupplung mit dem aufgabengemäßen Dämpfungseigenschaften dar. Zur Erleichterung der Eindrückens können die freien Enden der Schenkel mit radial nach innen gerichteten Einführschrägen versehen sein. Diese Ausführung erleichtert - ebenso wie die vorbeschriebene Ausführung - eine Montage und auch eine Demontage der zu haltemden Leitung.

Das Halterungselement kann vorteilhaft mit einer Befestigungsschraube über das Befestigungsteil am jeweiligen Fahrzeugaufbauteil festlegbar ausgebildet sein, wobei für die Befestigungsschraube wenigstens eine Langlochausnehmung in das Befestigungsteil eingebracht bzw. eingeformt ist, um einen Fertigungstoleranzausgleich zwischen den Bauteilen zu ermöglichen.

Die erfindungsgemäße Halterung für starre Leitungen ist aus einem Befestigungsteil und mehreren an diesem angeordneten erfindungsgemäßen Halterungselementen gebildet, so daß an dieser mehrere Leitungen, insbesondere jedoch die Kältemittel-Druckleitung und die Kältemittel-Saugleitung einer Klimaanlage, gehaltert werden können, vorzugsweise in paralleler Ausrichtung. Diese Halterung ist bevorzugt einstückig ausgebildet, wodurch der Fertigungs- und Montageaufwand erheblich reduziert wird.

Die Halterung kann so ausgebildet sein, daß sie eine Leitung mit einem abgewinkelten Bereich aufnehmen kann. Für diese weist sie wenigstens zwei Halterungselemente auf, von denen eins in dem abgewinkelten Leitungsbereich vorgesehen ist. Um Fertigungstoleranzen ausgleichen und damit Spannungen in der Halterung vermeiden zu können, ist das für den abgewinkelten Leitungsbereich vorgesehene Halterungselement in der durch diesen und den geraden Leitungsbereich bestimmten Ebene quer zur Achse seiner Aufnahme am Befestigungsteil verschiebbar angeordnet. Dazu kann eine quer zur Achse der Aufnahme am Befestigungsteil ausgebildete Gleitschiene dienen.

Diese Halterung ist bevorzugt aus einem Kunststoff mit einem geringen Temperaturkoeffizienten, insbesondere dem elastischen Konstruktionskunststoff HYTREL der Fa. Du Pont, ausgeführt, so daß die erfindungsgemäße Aufgabe der Entkopplung des Fahrzeugs von den dynamischen und akustischen Beaufschlagungen für jede der zu halternden Leitungen sichergestellt ist. Bis auf das vorstehend beschriebene Halterungselement kann sie einstückig ausgebildet sein.

Der geringe Temperaturkoeffizient des genannten Werkstoffs sorgt dafür, daß diese Entkopplung auch bei sehr unterschiedlichen Leitungs- und Motorraumtemperaturen gegeben ist.

Diese Halterung stellt eine Kompakthalterung für mehrere Leitungen dar, mit der eine Montage und Demontage der Leitungen erleichtert wird, wobei insbesondere eine einstückige Ausführung mit einer Kosten- und Gewichtsreduzierung verbunden ist und auch einen Beitrag zur Montageprozeßsicherheit liefert.

Die Erfindung wird nachstehend anhand von Ausführungsbeispielen erläutert. In der zugehörigen Zeichnung zeigen schematisch:
- Fig. 1.: eine erfindungsgemäße Halterung für zwei starre Leitungen in einer perspektivischen Darstellung,
- Fig. 2a.: ein Halterungselement in einer axialen Sicht in geschlossenem Zustand,
- Fig. 2b.: dieses Halterungselement in geöffnetem Zustand und
- Fig. 3.: eine andere Ausführungsform eines Halterungselementes.

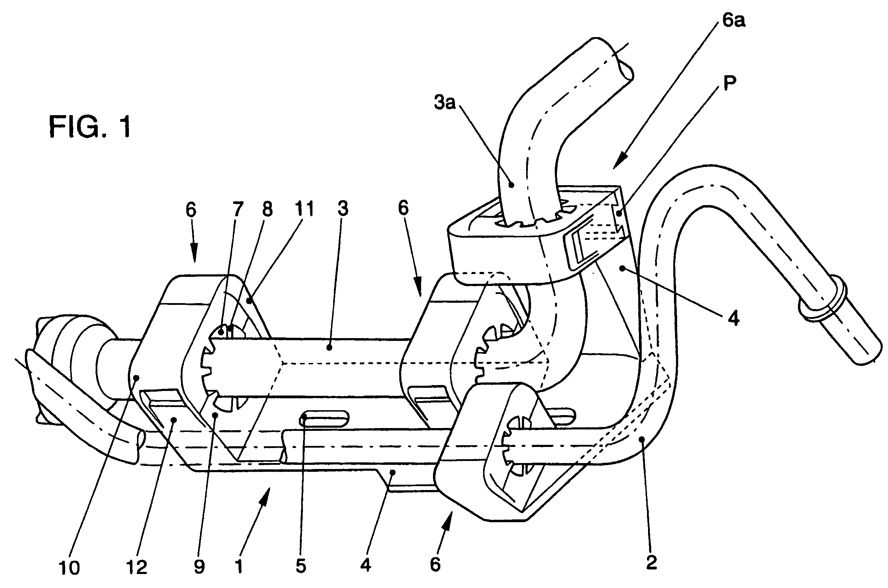

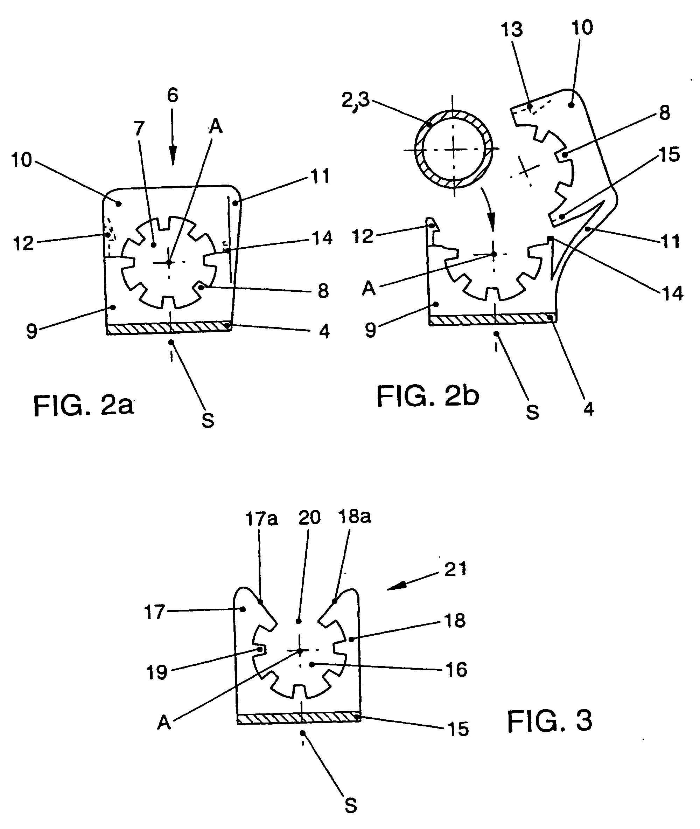

Fig. 1 zeigt eine Halterung 1 aus HYTREL, einem elastischen Konstruktionskunststoff mit einem geringen Temperaturkoeffizienten für zwei Kältemittelleitungen 2 und 3 einer Klimaanlage (nicht dargestellt) in einem Personnenkraftwagen. Die Kältemittel-Druckleitung 2 ist zwischen dem Kondensator der Klimaanlage und einem Expansionsventil angeordnet und die Kältemittel-Saugleitung 3 zwischen dem Expansionsventil und dem Kompressor der Klimaanlage. Beide Leitungen 2 und 3 verlaufen im Bereich der Halterung 1 parallel, wobei die Kältemittel-Saugleitung 3 auch einen abgewinkelten Leitungsbereich 3a im Halterungsbereich hat. Die Halterung 1 ist zur Anordnung an einem zwischen den Längsträgem ausgebildeten Deckblech bestimmt und weist ein Befestigungsteil 4 mit zwei Langlöchem 5 zur Verschraubung an dem Deckblech sowie mehrerer Halterungselemente 6 und ein Halterungselement 6a, ebenfalls aus HYTREL gefertigt, auf. Die Halterungselemente 6 sind stoffschlüssig und das Halterungselement 6a ist über eine Prismenführung P mit dem Befestigungsteil 4 verbunden und haben jeweils eine Aufnahme 7 für die jeweilige Leitung 2 bzw. 3. Das Halterungselement 6a ist durch die Prismenführung P und die in ihr ausgebildete Gleitschiene quer zur Achse A seiner Aufnahme 7 (Fig. 2a, 2b) und parallel zur Leitung 3 bzw. in der durch die Leitung 3 und deren Leitungsbereich 3a bestimmten Ebene am Befestigungsteil 4 verschiebbar angeordnet. In der Aufnahme 7 sind radial nach innen gerichtete und im Abstand zueinander angeordnete Klemmrippen 8 ausgebildet, die bei geschlossener Aufnahme 7 elastisch an der jeweiligen Leitung 2 bzw. 3 angedrückt sind und diese zentriert in der Aufnahme 7 haltern. Die Aufnahmen 7 sind an den Durchmesser der zu haltemden Leitung 1 bzw. 2 angepaßt.

Die Halterungselemente 6 und das Halterungselement 6a sind im Bereich der Aufnahme 7 längs ihrere Achse zweigeteilt, und die beiden Teile 9 und 10 sind durch ein Filmscharnier 11 miteinander verbunden. Am Teil 9 ist auf der dem Filmschamier 11 abgewandten Seite der Aufnahme 7 eine Rastnase 12 angeformt, die in eine mit dieser korrespondierende Rastausnehmung 13 (Fig. 2a und 2b, gestrichelt dargestellt) eingreift. Die Rastelemente 12 und 13 legen die beiden Teile 9 und 10 aneinander fest und nehmen dabei auch die auftretenden Klemmkräfte auf.

In den Fig. 2a und 2b ist ein Halterungselement 6 (6a entsprechend) im geschlossenen und geöffneten Zustand dargestellt. Zu erkennen ist, daß die Teile 9 und 10 außer den Rastelementen 12 und 13 filmschamierseitig jeweils ein Arretierungsetement 14 bzw. 15 aufweisen, um eine zusätzliche seitliche Arretierung der beiden Teile 9 und 10 sicherzustellen.

Die Montage einer Leitung 2 oder 3 erfolgt auf einfache Weise durch Eindrücken derselben in das Teil 9 eines jeden für die jeweilige Leitung 2 oder 3 vorgesehenen Halterungselementes 6 und 6a (Fig. 2b) und anschließendes Schwenken des jeweiligen Teiles 10 über die Leitung 2 oder 3 und Andrücken bis zum Verrasten der Rastelemente 12 und 13. Die Klemmrippen 8 und die Bereiche der Teile 9 und 10, an denen die Klemmrippen 8 angeformt sind, werden dabei elastisch komprimiert, so daß die gehalterte Leitung 2 oder 3 dynamisch und akustisch weitgehend entkoppelt an dem jeweiligen Halterungselement 6 und 6a bzw. der Halterung 1 festgelegt ist. Eine Demontage erfolgt auf die gleiche einfache Weise durch Lösen der Rastverbindung 12/13 und Herausziehen der Leitung 2 bzw. 3.

In Fig. 3 ist ein einstöckig mit einem Befestigungsteil 15 versehenes Halterungselement 21, ebenfalls aus HYTREL gefertigt, dargestellt. Dieses weist zwei eine Aufnahme 16 bildende Schenkel 17 und 18 mit Klemmrippen 19 auf, zwischen denen ein Spalt 20 zum Einführen einer Leitung 2 oder 3 ausgebildet ist An den freien Enden der Schenkel 17 und 18 sind Einführschrägen 17a und 18a ausgebildet. Die jeweilige Leitung 2 oder 3 wird auf einfache Weise zwischen die Schenkel 17 und 18 gedrückt, bis sie zwischen den Klemmrippen 19 klemmend fixiert ist

## Patentansprüche

1. Halterungselement für eine starre Leitung in einem Fahrzeug, mit einem Befestigungsteil und mit einer Aufnahme zum Fixieren der Leitung, **dadurch gekennzeichnet, daß** in der Aufnahme (7; 16) radial nach innen gerichtete und im Abstand zueinander angeordnete Klemmvorsprünge (8; 19) zur druckelastischen Anlage an der zwischen diesen aufgenommenen Leitung (2; 3) ausgebildet sind.

2. Halterungselement nach Anspruch 1, **dadurch gekennzeichnet, daß** dieses (21) einstückig ist und aus einem elastischen Werkstoff mit einem geringen Temperaturkoeffizienten besteht

3. Halterungselement nach Anspruch 2, **dadurch gekennzeichnet, daß** der Werkstoff der elastische Konstruktionskunststoff HYTREL ist.

4. Halterungselement nach Anspruch 1, **dadurch gekennzeichnet, daß** die Klemmvorsprünge axial ausgerichtete Klemmrippen (8, 19) sind.

5. Halterungselement nach Anspruch 1 oder 2, **dadurch gekennzeichnet, daß** die Aufnahme (7; 16) längs ihrer Achse (A) zweigeteilt ist und die beiden Teile (9; 10) durch ein parallel zur Achse (A) angeordnetes Filmschamier (11) miteinander verbunden sind.

6. Halterungselement nach Anspruch 5, **dadurch gekennzeichnet, daß** die beiden Teile (9; 10) Rastelemente (12; 13) aufweisen, mit denen die Teile (9; 10) unter Aufnahme der beim Umgreifen der jeweiligen Leitung (2; 3) auftretenden Klemmkräfte aneinander festlegbar sind.

7. Halterungselement nach Anspruch 1 oder 2, **dadurch gekennzeichnet, daß** dieses (21) jeweils zwei die Aufnahme (16) bildende Schenkel (17, 18) aufweist, zwischen denen leitungseinführseitig ein Spalt (20) zum Einführen der Leitung (2; 3) ausgebildet ist.

8. Halterungselement nach Anspruch 7, **dadurch gekennzeichnet, daß** die freien Enden der Schenkel (17, 18) mit Einführschrägen (17a, 18a) für die Leitung (2; 3) versehen sind.

9. Halterungselement nach Anspruch 1, **dadurch gekennzeichnet, daß** das Befestigungsteil (415) durch eine Schraubverbindung (S) an einem Fahrzeugaufbauteil festlegbar ist

10. Halterung für starre Leitungen in einem Fahrzeug, mit einem Befestigungsteil und mehreren Halterungselementen für die Leitungen, **dadurch gekennzeichnet, daß** die Halterungselmente (6; 21) jeweils eine Aufnahme (7; 16) zum Fixieren der jeweiligen Leitung (2; 3) aufweisen, und daß in der Aufnahme (7; 16) radial nach innen gerichtete und im Abstand zueinander angeordnete Klemmvorsprünge (8; 19) zur druckelastischen Anlage an der zwischen diesen aufgenommenen Leitung (2; 3) ausgebildet sind.

11. Halterung nach Anspruch 10, **dadurch gekennzeichnet, daß** das jeweilige Halterungselement (6) im Bereich der Aufnahme (7) in axialer Richtung zweigeteilt ist und die beiden Teile (9; 10) durch ein Filmschamier (11) miteinander verbunden sind und Rastelemente (12; 13) zum Aneinanderfestlegen unter Aufnahme der auftretenden Klemmkräfte aufweisen, oder daß das jeweilige Halterungselement (21) jeweils zwei die Aufnahme (16) bildende Schenkel (17, 18) aufweist, zwischen denen leitungseinführseitig ein Spalt (20) zum Einführen der Leitung (2; 3) ausgebildet ist.

12. Halterung nach Anspruch 10, **dadurch gekennzeichnet, daß** diese einstückig ausgebildet ist.

13. Halterung nach Anspruch 10 oder 11, **dadurch gekennzeichnet, daß** zur Festlegung einer Leitung (3) mit einem abgewinkelten Leitungsbereich (3a) ein Halterungselement (6a) für diesen (3a) vorgesehen ist, und daß dieses Halterungselement (6a) in der durch die Leitung (3) und den abgewinkelten Leitungsbereich (3a) bestimmten Ebene quer zur Achse (A) seiner Aufnahme (7) verschiebbar am Befestigungsteil (4) angeordnet ist.

14. Halterung nach Anspruch 13, **dadurch gekennzeichnet, daß** das Halterungselement (6a) an einer quer zur Achse (A) seiner Aufnahme (7) am Befestigungsteil (4) ausgebildeten Gleitschiene (P) angeordnet ist.

15. Halterung nach einem der Ansprüche 10 bis 14, **dadurch gekennzeichnet, daß** diese aus einem elastischen Werkstoff mit einem geringen Temperaturkoeffizienten gebildet ist, vorzugsweise aus dem Kunststoff HYTREL.

16. Halterung nach Anspruch 10, **dadurch gekennzeichnet, daß** das Befestigungsteil (4; 15) durch eine Schraubverbindung (S) an einem Fahrzeugaufbauteil festlegbar ist.

## Claims

1. Securing element for a rigid pipe in a vehicle, having a fastening part and having a receptacle for fixing the pipe, **characterized in that** clamping projections (8; 19) which are directed radially inwards and are arranged at a distance from each other are formed in the receptacle (7; 16) in order to bear in a compressively elastic manner against the pipe (2; 3) which is held between them.

2. Securing element according to Claim 1, **characterized in that** the latter (21) is in a single piece and consists of an elastic material with a low temperature coefficient.

3. Securing element according to Claim 2, **characterized in that** the material of the elastic constructional plastic is HYTREL.

4. Securing element according to Claim 1, **characterized in that** the clamping projections are axially orientated clamping ribs (8, 19).

5. Securing element according to Claim 1 or 2, **characterized in that** the receptacle (7; 16) is divided into two along its axis (A) and the two parts (9; 10) are connected to each other by a film hinge (11) arranged parallel to the axis (A).

6. Securing element according to Claim 5, **characterized in that** the two parts (9; 10) have latching elements (12; 13) with which the parts (9; 10) can be fastened to each other absorbing the clamping forces which occur when the parts are fitted around the particular pipe (2; 3).

7. Securing element according to Claim 1 or 2, **characterized in that** the latter (21) has in each case two limbs (17, 18) which form the receptacle (16) and between which a gap (20) for introducing the pipe (2; 3) is formed on the pipe-introducing side.

8. Securing element according to Claim 7, **characterized in that** the free ends of the limbs (17, 18) are provided with introducing slopes (17a, 18a) for the pipe (2; 3).

9. Securing element according to Claim 1, **characterized in that** the fastening parts (4, 15) can be fastened on a vehicle body part by means of a screw connection (S).

10. Securing system for rigid pipes in a vehicle, having a fastening part and a plurality of securing elements for the pipes, **characterized in that** the securing elements (6; 21) each have a receptacle (7; 16) for fixing the particular pipe (2; 3), and **in that** clamping projections (8; 19) which are directed radially inwards and are arranged at a distance from each other are formed in the receptacle (7; 16) in order to bear in a compressively elastic manner against the pipe (2; 3) which is held between them.

11. Securing system according to Claim 10, **characterized in that** the particular securing element (6) in the region of the receptacle (7) is divided in two in the axial direction and the two parts (9; 10) are connected to each other by a film hinge (11) and have latching elements (12, 13) for fastening them to each other absorbing the clamping forces which occur, or **in that** the particular securing element (21) has in each case two limbs (17, 18) which form the receptacle (16) and between which a gap (20) for introducing the pipe (2; 3) is formed on the pipe-introducing side.

12. Securing system according to Claim 10, **characterized in that** the latter is of single-piece design.

13. Securing system according to Claim 10 or 11, **characterized in that**, in order to secure a pipe (3) having an angled pipe region (3a), a securing element (6a) is provided for the said pipe region (3a), and **in that** this securing element (6a) is arranged on the fastening part (4) in a manner enabling it to be displaced transversely with respect to the axis (A) of its receptacle (7) in the plane defined by the pipe (3) and the angled pipe region (3a).

14. Securing system according to Claim 13, **characterized in that** the securing element (6a) is arranged on a sliding rail (P) which is formed on the fastening part (4) transversely with respect to the axis (A) of its receptacle (7).

15. Securing system according to one of Claims 10 to 14, **characterized in that** the latter is formed from an elastic material with a low temperature coefficient, preferably from the plastic HYTREL.

16. Securing system according to Claim 10, **characterized in that** the fastening part (4; 15) can be fastened on a vehicle body part by means of a screw connection (S).

## Revendications

1. Elément de fixation pour une conduite rigide dans un véhicule, avec une pièce de fixation et un logement permettant de fixer la conduite, **caractérisé en ce que** des saillies de serrage (8, 19) dirigées de façon radiale vers l'intérieur et distancées entre elles sont conçues dans le logement (7, 16) pour assurer un appui par compression élastique sur la conduite (2, 3) logée entre celles-ci.

2. Elément de fixation selon la revendication 1, **caractérisé en ce que** celui-ci (21) est en monobloc et qu'il est constitué dans une matière première élastique présentant un faible coefficient thermique.

3. Elément de fixation selon la revendication 2, **caractérisé en ce que** la matière première est la matière plastique élastique de construction HYTREL.

4. Elément de fixation selon la revendication 1, **caractérisé en ce que** les saillies de serrage sont des nervures de serrage (8, 19) orientées de façon axiale.

5. Elément de fixation selon l'une quelconque des revendications 1 ou 2, **caractérisé en ce que** le logement (7, 16) est divisé en deux le long de son axe (A) et **en ce que** les deux pièces (9, 10) sont reliées entre elles par une charnière à film (11), disposée à la parallèle de l'axe (A).

6. Elément de fixation selon la revendication 5, **caractérisé en ce que** les deux pièces (9, 10) présentent des éléments à crans (12, 13) par l'intermédiaire desquels les pièces (9, 10) peuvent être fixées l'une sur l'autre, tout en absorbant les forces de serrage produites lors de l'enveloppement de la conduite respective (2, 3).

7. Elément de fixation selon l'une quelconque des revendications 1 ou 2, **caractérisé en ce que** celui-ci (21) comporte respectivement deux branches (17, 18) formant le logement (16), entre lesquelles une fente (20) située du côté entrée de la conduite est conçue pour insérer la conduite (2, 3).

8. Elément de fixation selon la revendication 7, **caractérisé en ce que** les extrémités libres des branches (17, 18) sont munies de biseaux d'insertion (17a, 18a) pour la conduite (2, 3).

9. Elément de fixation selon la revendication 1, **caractérisé en ce que** la pièce de fixation (4, 15) peut être fixée par un raccord à vis (S) sur un élément de carrosserie du véhicule.

10. Fixation pour conduites rigides dans un véhicule, avec une pièce de fixation et plusieurs éléments de fixation pour les conduites, **caractérisée en ce que** les éléments de fixation (6, 21) présentent respectivement un logement (7, 16) permettant de fixer la conduite respective (2, 3), des saillies de serrage (8, 19) dirigées de façon radiale vers l'intérieur et distancées l'une par rapport à l'autre étant conçues dans le logement (7, 16) pour assurer un appui à compression élastique sur la conduite (2, 3) logée entre celles-ci.

11. Fixation selon la revendication 10, **caractérisée en ce que** l'élément de fixation (6) respectif est divisé en deux en direction axiale, dans la zone du logement (7), et **en ce que** les deux pièces (9, 10) sont reliées l'une à l'autre par une charnière à film (11), et présentent des éléments à crans (12, 13) pour les fixer l'une à l'autre, en absorbant les forces de serrage qui se produisent ou **en ce que** l'élément de fixation (21) respectif présente respectivement deux branches (17, 18) formant le logement (16), entre lesquelles une fente (20) située du côté entrée de la conduite est conçue pour insérer la conduite (2, 3).

12. Fixation selon la revendication 10, **caractérisée en ce qu'**elle est conçue en monobloc.

13. Fixation selon l'une quelconque des revendications 10 ou 11, **caractérisée en ce que** pour fixer une conduite (3) avec une zone de la conduite coudée (3a), un élément de fixation (6a) est prévu pour ladite zone (3a) et **en ce que** cet élément de fixation (6a) est disposé de façon déplaçable sur la pièce de fixation (4) dans le plan défini par la conduite (3) et la zone de la conduite coudée (3a), transversalement à l'axe (A) de son logement (7).

14. Fixation selon la revendication 13, **caractérisée en ce que** l'élément de fixation (6a) est disposé sur une glissière (P) conçue sur la pièce de fixation (4) transversalement à l'axe (A) de son logement (7).

15. Fixation selon l'une quelconque des revendications 10 à 14, **caractérisée en ce que** celle-ci est composée en une matière première élastique à faible coefficient thermique, de préférence en la matière plastique HYTREL.

16. Fixation selon la revendication 10, **caractérisée en ce que** la pièce de fixation (4, 15) peut être fixée sur un élément de carrosserie d'un véhicule, par l'intermédiaire d'un raccord à vis (S).
